# FASCICULE DE BREVET EUROPEEN

(11) **EP 3 245 107 B1**
(45) Date de publication et mention de la délivrance du brevet: **20.02.2019**
(21) Numéro de dépôt: 15820223.4
(22) Date de dépôt: 11.12.2015
(51) Int. Cl.: B60R 19/18

(54) **ÉLÉMENT ABSORBEUR D'ÉNERGIE POUR PARE-CHOCS AUTOMOBILE**
ENERGIEABSORBIERENDES ELEMENT FÜR AUTOSTOSSFÄNGER
ENERGY-ABSORBING ELEMENT FOR CAR BUMPER

(30) Priorité: 14.01.2015 FR 1550280
(43) Date de publication de la demande: 22.11.2017
(73) Titulaire: Renault S.A.S., 92100 Boulogne-Billancourt (FR)
(72) Inventeur: BEZEAULT, Loic, 78000 Versailles (FR); DUHEM, Xavier, 92130 Issy Les Moulineaux (FR)
(86) Numéro de dépôt international: PCT/FR2015/053437
(87) Numéro de publication internationale: WO 2016/113477

(56) Documents cités:
- FR-A1- 2 862 262
- FR-A1- 2 959 706
- FR-A1- 2 980 145
- FR-A1- 2 998 524

## Description

L'invention a pour objet les structures d'absorption d'énergie de choc, et plus particulièrement les structures d'absorption d'énergie de choc disposées au niveau des pare-chocs avant et/ou des pare-chocs arrière d'un véhicule automobile. De telles structure d'absorption de choc doivent permettre, lors de l'écrasement du pare-chocs en direction du véhicule, de consommer une partie, voire si possible la totalité de l'énergie du choc afin de limiter les déformations des structures situées derrière les pare-chocs et l'élément absorbeur d'énergie, et d'éviter l'intrusion de corps étrangers, ou l'intrusion de portions même du véhicule à l'intérieur de l'habitacle du véhicule. En cas de petit choc, la structure d'absorption de choc doit permettre de limiter les dommages à la structure elle-même et aux éléments se trouvant en avant de la structure d'absorption d'énergie de choc afin de pouvoir remettre en état le véhicule à moindre coût, et en conservant l'intégrité structurelle des éléments se trouvant en arrière de la structure d'absorption de choc. On connaît les structures d'absorption d'énergie de choc en métal, par exemple en acier ou en aluminium. Ces structures présentent généralement des formes favorisant un écrasement "en accordéon" de la structure d'absorption de choc afin de multiplier les zones de déformation plastique, et d'augmenter ainsi la quantité d'énergie totale absorbée. Sur ces structures connues d'absorption de choc, est généralement assemblée une poutre métallique qui transfère l'effort de l'impact sur la structure d'absorption de choc lors d'un choc suivant un axe non aligné avec un axe d'une des structures d'absorption de choc soutenant la poutre. Un exemple de poutre correspondant au préambule de la revendication 1 est divulgué par FR 2 998 524 A1. Ces dispositifs connus sont généralement assez lourds, et sont également encombrants dans le sens axial du véhicule, en ce sens qu'ils nécessitent des distances disponibles pour l'écrasement de la structure qui se ressentent sur l'encombrement total du véhicule dans le sens longitudinal de celui-ci.

L'invention a pour but de proposer des systèmes d'absorption d'énergie de choc qui présentent un moindre encombrement dans le sens longitudinal du véhicule pour une même capacité d'absorption d'énergie de choc

A cette fin, l'invention propose un élément absorbeur d'énergie de choc pour véhicule automobile selon la revendication 1.

Avantageusement, la surface totale de matière des sections droites de chaque portion de poutre creuse, perpendiculairement à l'axe longitudinal, est décroissante entre une première extrémité de la portion de poutre et une seconde extrémité de la portion de poutre. La première extrémité de la portion de poutre creuse est typiquement une extrémité par laquelle la portion de poutre creuse est assemblée sur le véhicule. La seconde extrémité de la portion de poutre creuse est typiquement une extrémité de la portion de poutre creuse qui est distante du véhicule. Par surface totale de matière, on entend l'intégrale de surface sur une section droite de la portion de poutre creuse, en ne comptabilisant que les portions de section droite effectivement occupées par la matière formant la portion de poutre.

Par (dé)croissant d'une extrémité à l'autre de la portion de poutre, on entend, on entend une variation monotone non constante d'une extrémité à l'autre de la portion de poutre. De préférence, la variation est une (dé)croissance stricte sur une longueur cumulée de la portion de poutre qui représente au moins le quart, de préférence au moins le tiers, et avantageusement au moins la moitié de la distance minimale entre un point d'assemblage de la poutre sur une structure du véhicule à une extrémité, et un point de la portion de poutre creuse le plus distant de cette structure de véhicule à l'autre extrémité de la portion de poutre creuse.

La première portion de coque monobloc et les deux portions de poutres creuses peuvent être réalisées dans un même matériau. La première portion de coque monobloc et les deux portions de poutres creuses peuvent être réalisées par assemblage d'au plus trois portions de coques monobloc, voire d'au plus deux portions de coques monobloc.

Chaque portion de poutre creuse peut présenter une forme sensiblement tronconique. La surface tronconique peut correspondre à une peau extérieure, ou à une peau intérieure de la portion de poutre creuse, ou encore à une surface comprise dans le volume de matière constituant la poutre creuse. La surface tronconique peut être éventuellement une portion de cylindre. Cylindre et tronc de cône s'entendent ici au sens général, c'est-à-dire que leurs génératrices peuvent s'appuyer sur des courbes fermées quelconques, pas nécessairement de révolution. On peut envisager des variantes de réalisation non tronconiques. Avantageusement, si on part de la seconde extrémité, le contour extérieur de chaque section droite de la poutre peut s'inscrire dans le contour extérieur d'une section droite quelconque de la poutre située plus près de la première extrémité de la poutre. La consommation par déformation et/ou rupture des parois de la poutre se fait ainsi section par section en se propageant vers les sections plus résistantes, situées plus près du véhicule.

Selon l'invention, l'épaisseur radiale du contour de la section fermée de chaque poutre est décroissante entre la première et la seconde extrémité de la portion de poutre.

Chaque portion de poutre peut comprendre au moins une première et une seconde zone d'ailettes, au niveau desquelles la section droite de la poutre s'étend vers l'extérieur du contour moyen fermé de la poutre en formant une première ailette dans un premier plan géométrique de renfort et en formant une seconde ailette dans un second plan géométrique de renfort.

Les ailettes augmentent encore la résistance globale en flexion de la poutre, ce qui permet d'obtenir lors d'un choc une consommation d'énergie par effondrement local en compression de la matière de la poutre, en évitant un flambement de la poutre.

L'élément absorbeur d'énergie peut comprendre au moins une portion de coque réalisée en matériau composite à matrice à base polymère et renforcé par des fibres longues. La matrice à base polymère peut comprendre notamment de la résine de type thermodur (par exemple époxyde) ou de la résine de type thermoplastique (par exemple polyamide). On entend ici par fibres longues des fibres de longueur supérieure ou égale au millimètre. De préférence le composite comprend des fibres "continues", c'est-à-dire de longueur supérieure ou égale au cm. De manière particulièrement avantageuse, le composite comprend des fibres tissées, ou comprend des "mats" plus ou moins isotropes de fibres, par exemple de fibres de carbone, de fibres aramides, de fibres de verre, ou de mélange de ces fibres et/ou d'autres fibres longues de renfort connues, par exemple synthétiques ou végétales. Les fibres du composite peuvent être orientées suivant des directions croisées, suivant des méthodes de moulage de composites connues à partir de mats ou de tissus de fibres de renfort imprégnés de matrice. Le matériau composite peut comprendre une fraction massique de fibres supérieure à 30%, de préférence supérieure à 40%, et de préférence comprise entre 50% et 80% en masse. La première portion de coque monobloc, la seconde portion de coque monobloc, et/ou la seconde portion locale de coque et la troisième portion locale de coque peuvent être réalisées dans ce même matériau composite.

L'élément absorbeur d'énergie peut comprendre deux demi-coques en matériau composite assemblées suivant au moins deux portions planes de chaque demi-coque, chaque portion plane contribuant à former une portion de l'épaisseur d'une des zones d'ailettes. Les deux demi coques peuvent être de formes et de dimensions différentes. Une des demi-coques peut être sensiblement plus grande que l'autre demi-coque. Une même demi-coque peut être assemblée à deux autres demi-coques pour former deux portions de poutres creuses. Les portions planes peuvent avantageusement comprendre une ou plusieurs portions qui se trouvent dans les zones d'ailettes. De manière préférentielle, les zones d'assemblage entre les demi-coques comprennent également au moins une zone s'étendant au-delà de la portion de poutre de section creuse. Selon un mode de réalisation préféré, la section de poutre creuse se prolonge à une extrémité par une portion de coque qui ferme cette extrémité de la portion de poutre creuse par une surface sensiblement perpendiculaire à l'axe longitudinal de la poutre creuse. L'assemblage entre les deux demi-coques peut être réalisé par collage, ou par d'autres méthodes connues, par exemple par friction, en fonction de la nature du composite utilisé. La méthode d'assemblage entre les deux demi-coques est de préférence choisie pour assurer une cohésion surfacique entre les deux demi coques - par opposition à une série de liaisons ponctuelles-, de manière à ce que, suite à chaque rupture ou destruction d'une section droite de la poutre, une autre section droite à contour fermé puisse reprendre les efforts appliqués.

Chaque demi-coque peut être formée en matériau composite renforcé de fibres disposées en couches successives. Le nombre de couches de fibres de renfort peut augmenter entre la seconde et la première extrémité de la portion de poutre creuse.

Toutes les portions de poutres creuses peuvent être définies par la première portion de coque monobloc et par une seule deuxième portion de coque monobloc assemblée sur la première.

Selon un autre mode de réalisation, toutes les portions de poutres creuses peuvent être définies chacune pour partie par la première portion de coque monobloc et pour partie par une autre portion locale de coque spécifique à cette portion de poutre creuse et assemblée sur la première portion de coque monobloc.
La première extrémité de l'élément absorbeur d'énergie peut typiquement être assemblée sur une traverse de véhicule automobile. La seconde extrémité de l'élément absorbeur d'énergie peut typiquement être assemblée sur un longeron de véhicule automobile. Une plaque métallique peut éventuellement être interposée entre des rebords du longeron et l'élément absorbeur d'énergie, et les secondes portions d'assemblage des demi-poutres, soit pour permettre de fixer un anneau de traction du véhicule vissé dans la plaque, et/ou pour éviter un effacement de l'élément absorbeur d'énergie à l'intérieur du longeron en cas où l'élément absorbeur d'énergie se consommerait suivant une chronologie non prévue (par exemple suite à une rupture du côté de sa section la plus importante).

L'axe longitudinal de la poutre peut correspondre typiquement avec un axe d'avancement d'un véhicule, ou axe longitudinal du véhicule. La dimension la plus importante de la poutre n'est pas nécessairement sa dimension suivant l'axe longitudinal. Plus généralement, l'axe longitudinal de la poutre peut correspondre à un axe d'impact probable sur l'élément absorbeur de choc.

D'autres buts, caractéristiques et avantages de l'invention apparaîtront à la lecture de la description suivante, donnée uniquement à titre d'exemple non limitatif, et faite en références aux dessins annexés sur lesquels :
La figure 1 est une vue simplifiée en perspective d'un système d'absorption d'énergie de choc selon l'invention, typiquement situé à l'arrière d'un véhicule automobile, l'invention n'étant par ailleurs pas limitée à cette zone du véhicule;
La figure 2 est une vue éclatée en perspective d'un système d'absorption d'énergie de choc selon l'invention selon un premier mode de réalisation;
La figure 3 est une vue éclatée en perspective d'un système d'absorption d'énergie de choc selon l'invention selon un second mode de réalisation;
La figure 4 est une vue en section par un plan horizontal d'un système d'absorption d'énergie de choc selon l'invention.

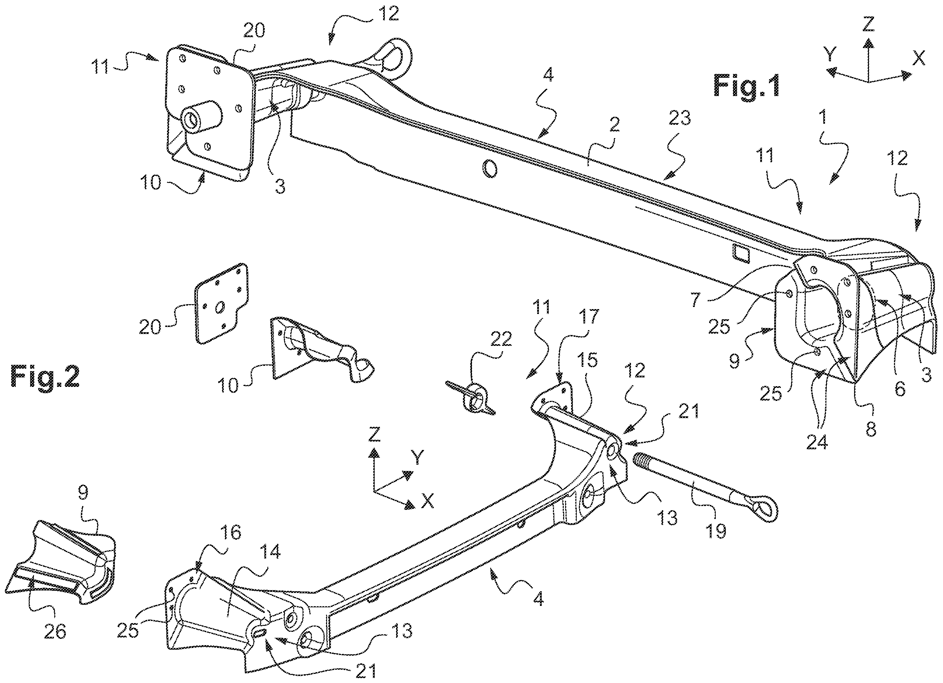

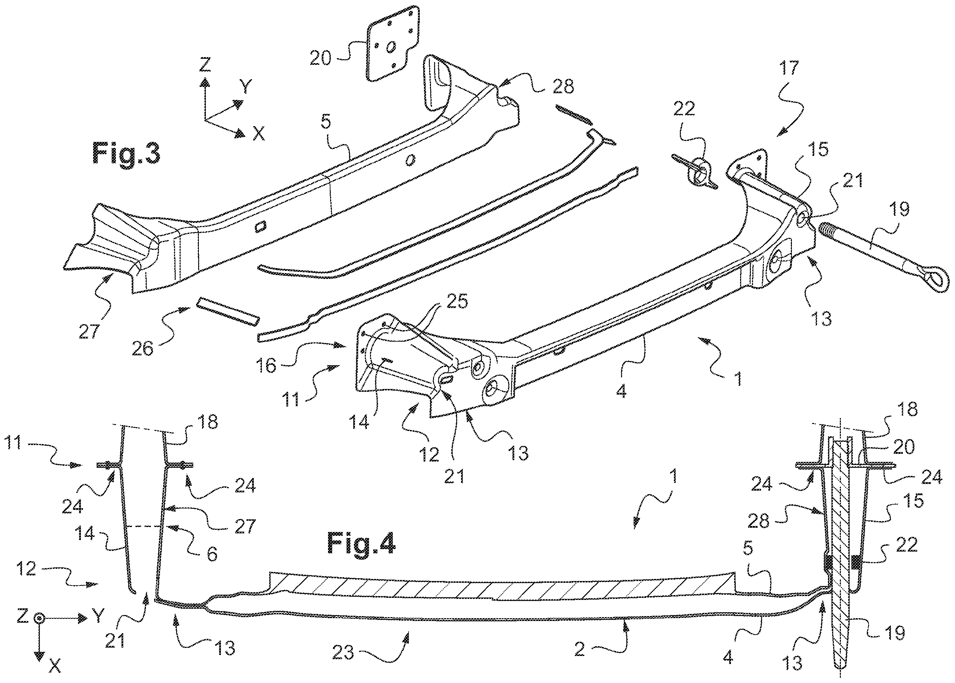

Dans la présente description, les directions et orientations sont indiquées en références à un repère orthonormé direct XYZ dans lequel X représente la direction longitudinale -i.e. la direction d'avant en arrière du véhicule, dirigée vers l'arrière du véhicule, Y représente la direction transversale au véhicule, dirigé vers la droite du véhicule et Z est la direction verticale, dirigée vers le haut.
Tel qu'illustré sur la figure 1, un élément absorbeur d'énergie 1 selon l'invention comprend une structure de coque 2 s'étendant ici suivant la direction transversale y d'un véhicule, et comportant au moins deux portions 3 chacune en forme de poutre creuse, dont l'axe de poutre s'étend suivant une direction longitudinale X du véhicule. Les portions de poutre creuse 3 ont un profil tel qu'une section dans un plan y-z vertical transversal au véhicule, présente un contour moyen 6 qui est un contour moyen fermé de la poutre creuse. Comme illustré sur les figures 2 et 3, la structure de coque 2 comprend une première portion de coque monobloc 4 s'étendant sur la largeur transversale (selon l'axe Y) de la structure de coque 2 et comprenant une première paroi de poutre creuse 14, et une seconde paroi de poutre creuse 15. La première paroi de poutre creuse 14 s'étend au moins sur la longueur -suivant l'axe X- d'une portion de poutre creuse 3, et constitue au moins une portion angulaire (en considérant une mesure angulaire autour de l'axe X) de la portion de poutre creuse sur toute la longueur axiale de celle-ci. De manière similaire la seconde paroi de poutre creuse 15 forme une portion angulaire d'une autre portion 3 de poutre creuse situé à l'opposé de la première portion de poutre creuse -par rapport à la longueur transversale de la structure de coque 2- La structure de coque 2 présente une plus grande dimension suivant la direction transversale Y du véhicule. Les deux portions de poutre creuse 3 sont disposées à chacune des extrémités de la structure de coque 2. Chacune des parois de poutre creuse respectivement 14, 15, peut se prolonger radialement (par rapport à l'axe X) par au moins une portion d'attache respectivement 16 et 17, s'étendant perpendiculairement à l'axe X et dans laquelle sont ménagés des perçages d'assemblage 25 permettant d'assembler la structure de coque 2 sur le véhicule, par exemple sur des extrémités de longeron 18 du véhicule (longerons visibles sur la figure 4). La première portion de coque monobloc 4 peut être assemblée, comme illustré sur la figure 3, à une deuxième portion de coque monobloc 5 s'étendant elle aussi sensiblement sur la largeur transversale du véhicule et dont les extrémités axiales (axiales au sens de l'axe Y) 27 et 28 sont assemblées respectivement avec la première paroi de poutre creuse 14 et avec la seconde paroi de poutre creuse 15, insérant ainsi la deuxième portion de coque monobloc entre ces deux parois 14 et 15, de manière à compléter la première et la seconde paroi de poutre creuse en deux portions 3 de poutre creuse à contour fermé. La première portion de coque monobloc 4 et la seconde portion de coque monobloc 5 peuvent être par exemple assemblées par collage le long de ligne de colle représentée ici en vue éclatée sous la référence 26. Dans ce mode de réalisation la structure de coque 2 comporte donc deux portions 3 de poutre creuse disposées l'une, à une extrémité droite de la structure de coque 2 et l'autre, à une extrémité gauche de la structure de coque 2 -droite et gauche définies par rapport au véhicule-. La structure de coque 2 peut comporter une portion de traverse 23 s'étendant entre des secondes extrémités 12 de chacune des portions de poutre creuse 3, et maintenue à une distance non nulle du reste de la structure du véhicule sur laquelle la structure de coque 2 est assemblée par des premières extrémités 11 des portions de poutre creuse 3.

La première portion de coque monobloc 4 et la seconde portion de coque monobloc 5 peuvent être assemblées le long de portions sensiblement planes 7 et 8 s'étendant chacune dans un plan comprenant l'axe longitudinal X, et formant des zones de renfort en forme d'ailettes radiales de chaque portion de poutre creuse 3, augmentant l'inertie de la section de la poutre par rapport à l'axe longitudinal de la portion de poutre 3.

Tel qu'illustré sur la figure 2, les portions de poutres creuses 3 peuvent aussi être obtenues en assemblant sur la première portion de coque monobloc, une seconde portion locale de coque 9 et une troisième portion locale de coque 10. Les portions locales de coques 9 et 10 ne contribuent pas à la portion centrale de traverse 23.

La seconde portion locale de coque 9 et la troisième portion locale de coque 10 sont ici assemblées respectivement sur la première paroi de poutre creuse 14 et la seconde paroi de poutre creuse 15. Dans l'exemple illustré, la seconde portion locale de coque 9 et la troisième portion locale de coque 10 sont ici assemblées entre (au sens de l'axe Y) la première paroi de poutre creuse 14 et la seconde paroi de poutre creuse 15.

De manière avantageuse, la structure de coque 2 comporte des zones 13 de recouvrement frontal, au niveau desquelles se superposent une épaisseur de coque correspondant à la première portion 4 de coque monobloc et au moins une autre épaisseur de coque. L'autre épaisseur de coque peut correspondre à une portion d'une deuxième portion de coque 5 monobloc. L'autre épaisseur de coque peut correspondre à une seconde portion locale de coque 9 ou à une troisième portion locale de coque 10 dans un autre mode de réalisation. Les zones 13 de recouvrement frontal peuvent typiquement comprendre des portions de coque s'étendant sensiblement perpendiculairement à l'axe X. Un effort frontal de choc peut être ainsi efficacement distribué entre les au moins deux portions 3 de poutre creuse destinées à consommer l'énergie d'impact du choc.

La structure de coque 2 peut comporter un ou plusieurs orifices 21 débouchant à l'intérieur d'au moins une portion de poutre creuse 3, et permettant d'insérer des éléments longitudinaux d'attache du véhicule, tel que par exemple un anneau de traction 19. De tels éléments longitudinaux d'attache peuvent être arrimés par exemple à une plaque métallique de renfort 20, disposée suivant une direction sensiblement parallèle au plan géométrique Y-Z, entre des rebords radiaux d'assemblage 24 des portions de poutre creuse 3 et les extrémités des longerons 18. La plaque métallique 20 peut par exemple être percée et être assemblée à un écrou fileté dans lequel est vissée une extrémité filetée de l'anneau de traction 19. L'anneau de traction 19 peut être maintenu radialement par rapport à la portion poutre creuse 3 par une pièce de guidage 22. On peut envisager des variantes de réalisation dans lesquelles l'anneau de traction 19 est vissé directement dans la pièce de guidage 22.

On entend par section droite de la structure de coque 2, une section par un plan de section droite qui est perpendiculaire à l'axe longitudinal X. Une portion de section droite de la poutre comprend ainsi un contour moyen fermé 6 de la poutre, pouvant s'étendre en deux excroissances sensiblement radiales correspondant à la première ailette 7 et à la seconde ailette 8. Les ailettes 7 et 8 se trouvent ici dans un même plan (vues en coupe elles sont alignées suivant une même droite) mais pourraient se trouver dans des plans différents, ces deux plans se croisant de préférence suivant une direction parallèle à la direction longitudinale X du véhicule.
Dans un mode de réalisation avantageux, au moins une plaque 20, par exemple, une plaque métallique, est assemblée entre au moins une extrémité d'un longeron et une portion de poutre creuse 3. Une telle plaque limite les possibilités de destruction de l'élément absorbeur d'énergie par traction-ouverture radiale de la portion de poutre creuse 3 assemblée sur la plaque. La plaque 20 est par exemple assemblée entre l'extrémité d'un longeron 18 du véhicule automobile, et des rebords radiaux d'assemblage 24 entourant la première extrémité des portions de poutres creuses 3, et comprenant une des portion d'attache respectivement 16 ou 17 de la première portion de coque monobloc. Cette plaque 20 améliore globalement en outre la résistance structurelle de la portion de poutre creuse 3 en renforçant l'effet d'encastrement de cette poutre au niveau de sa première extrémité 11.
Dans le mode de réalisation illustré en figure 2, un anneau de traction 19 est maintenu radialement, d'une part par une portion vissée dans la plaque 20, et d'autre part, par une pièce de guidage 22 entourant la tige de l'anneau de traction 19. La pièce de guidage 22 assure un transfert radial des efforts exercés par l'anneau sur la structure de coque 2, et plus particulièrement sur les parois d'une des portions de poutre creuse 3 entourant la tige de l'anneau. Cette pièce de guidage 22 peut être soit arc-boutée intérieurement sur la portion de poutre creuse 3, soit enfilée autour de la tige de l'anneau 19 de manière à rester en contact avec la tige de l'anneau 19. La tige de l'anneau 19 est de préférence mobile en translation par rapport à la pièce de guidage 22, de manière à éviter de déchirer la structure de la portion de poutre 3 si la tige venait à être arrachée hors de la plaque 20. La surface d'appui de la pièce de guidage 22 sur la structure de coque 2, est conçue de manière à limiter les concentrations de contraintes liées à l'appui de la pièce de guidage 22 sur la coque 2. Par exemple, la section longitudinale de la pièce de guidage 22- au niveau de la zone de contact entre cette pièce et la coque 2- épouse le contour intérieur de la coque 2. La longueur axiale de la zone de contact entre la pièce de guidage 22 et la coque 2 est de préférence au moins égale à la longueur axiale de la zone potentielle de contact entre la tige de l'anneau 19 et la pièce de guidage 22. Si possible, autour de la tige de l'anneau 19, la portion angulaire de la pièce de guidage qui est en contact avec la structure de coque 2, représente au moins le tiers de la circonférence la pièce de guidage 22. Selon un mode de réalisation avantageux, la pièce de guidage 22 peut comprendre une coupelle, par exemple métallique, dont le contour extérieur épouse sensiblement le contour intérieur de la portion de poutre creuse 3 dans laquelle elle est insérée. On obtient ainsi une structure de poids minimal assurant un bon transfert des efforts radiaux de l'anneau de traction 19 vers la structure de coque 2.

Chacune des première et seconde portions de coque monobloc et/ou chacune des portions locales de coque, peut être avantageusement réalisée en matériau composite à matrice organique, par exemple à matrice de résine de type thermodur (par exemple époxyde) ou de type thermoplastique (par exemple polyamide) renforcée par des fibres de carbone, ou par d'autres fibres présentant une contrainte à la rupture en compression élevée. Les fibres sont de préférence utilisées sous forme de structures tissées ou de structures textiles non tissées. Les couches de tissus de renfort ou les "mats" textiles peuvent être superposées de manière à combiner plusieurs directions préférentielles d'alignement de fibres et à obtenir une résistance élevée en compression du composite pour plusieurs directions d'impact potentielles sur l'élément absorbeur d'énergie de choc 1. Le pourcentage de fibres utilisé peut être relativement élevé, par exemple au moins égal à 30 % en masse de fibres, et de préférence supérieur à 45 % voire à 55 % de fibres en masse. Les deux demi-coques moulées en matériau composite peuvent être assemblées entre elles, de préférence suivant des techniques permettant de solidariser des surfaces continues de chacune des deux demi-coques, par exemple par collage, par "soudage" plastique -assemblage avec fusion locale des surfaces à assembler- ou par d'autres méthodes d'assemblage.

Afin d'obtenir une forte dissipation d'énergie sur un faible encombrement axial de l'élément absorbeur 1, l'élément absorbeur 1, et en particulier sa portion 3 en forme de poutre creuse, est conçu de manière à localiser l'endommagement de la poutre du côté de la seconde extrémité 12 de la portion de poutre creuse. De cette manière, lors d'un impact sur la portion de traverse 23, ou lors d'un impact directement au droit d'un des éléments absorbeurs 1, l'énergie de l'impact est utilisée pour déformer ou pour détruire par écrasement la portion de poutre 3 en consommant la portion de poutre 3 progressivement à partir de sa seconde extrémité 12. A cet effet, la valeur totale de surface correspondant aux zones pleines de la section droite de la portion de poutre 3, est croissante entre la seconde extrémité 12 -distante du véhicule- de la portion de poutre creuse 3, qui est par exemple l'extrémité supportant la portion de traverse 23, et la première extrémité 11 -assemblée sur le véhicule-de la portion de poutre creuse 3.

Cette évolution de la section peut être obtenue en augmentant progressivement la circonférence extérieure du contour moyen fermé 6 de la poutre entre sa seconde extrémité et sa première extrémité. La portion 3 de poutre creuse peut ainsi présenter une forme sensiblement tronconique s'évasant vers la première extrémité 11 de la portion de poutre. Selon une variante de réalisation qui peut se combiner à la précédente, l'épaisseur radiale "e" de matière au niveau du contour moyen fermé de la poutre peut également être croissante entre la seconde extrémité 12 et la première extrémité 11 de la portion de poutre 3. Cette variation d'épaisseur peut être obtenue en augmentant entre la seconde et la première extrémité, le nombre d'épaisseurs de tissus de renforts ou le nombre d'épaisseurs de "mats" renforçant le matériau composite. Afin de localiser la déformation et la rupture vers la seconde extrémité de la portion de poutre creuse 3, la portion de poutre creuse peut être conçue de manière à être encore plus rigide en flexion du côté de sa première extrémité 11 que du côté de sa seconde extrémité 12. Une telle rigidité peut être obtenue par exemple en augmentant le moment quadratique de la poutre autour d'un des axes transversaux Y ou Z des sections droite de la poutre. L'augmentation d'un moment quadratique peut être obtenue par une augmentation de l'épaisseur totale du contour moyen fermé, ou par l'augmentation de la distance du contour fermé, par rapport à l'axe (par exemple Y ou Z) par rapport auquel on calcule le moment quadratique.

L'invention ne se limite pas aux exemples de réalisation décrits et peut se décliner en de nombreuses variantes. On peut envisager des variantes de réalisation dans lesquelles la seconde portion locale de coque 9 et la troisième portion locale de coque 10 sont assemblées de part et d'autre (au sens de l'axe Y) de la première portion de coque monobloc 4, en accostant la première paroi de poutre creuse 14 et la seconde paroi de poutre creuse 15 par l'extérieur de la portion de coque monobloc 4. On peut également envisager des variantes de réalisation différentes notamment du mode de réalisation de la figure 3, et dans lesquels la portion de coque monobloc la plus large suivant l'axe transversal Y, et englobant l'autre portion de coque monobloc serait la portion de coque monobloc la plus proche du véhicule. On peut envisager des variantes de réalisation dans lesquelles la section de matière des portions de poutres creuses augmente entre l'extrémité assemblée à la structure du véhicule et l'extrémité distante du véhicule.

L'élément absorbeur de choc peut être réalisé en une seule coque monobloc, ou peut être réalisé au contraire en assemblant plus de deux portions de coques, au moins deux, et de préférence au moins trois des portions de coque s'étendant suivant l'axe longitudinal X, entre le véhicule et une traverse protégeant le véhicule des chocs avant ou arrière. La traverse peut être formée par une ou plusieurs des portions de coques.

L'élément absorbeur de choc peut être disposé entre le véhicule et une traverse extrême avant, entre le véhicule et une traverse extrême arrière, entre le véhicule et une coque pare-chocs avant, entre le véhicule et une coque pare-chocs arrière. La section de matière de la portion de poutre creuse pourrait être décroissante de l'extrémité distante de la portion de poutre creuse vers le véhicule. La section totale de la portion de poutre creuse peut varier sans que l'épaisseur des coques constitutives de la portion de poutre creuse ne varie. Inversement, la poutre creuse peut présenter une section à contour moyen constant, mais d'épaisseur radiale variable. L'élément absorbeur d'énergie selon l'invention, intègre à la fois des structures 3 consommatrices d'énergie et une structure de traverse permettant de transférer l'énergie du choc vers ces structures consommatrices d'énergie. Plusieurs éléments absorbeurs de chocs partagent un élément de coque commun. L'élément de coque commun relie transversalement deux éléments absorbeurs de choc et fait partie d'un élément de traverse reliant les deux éléments absorbeurs de choc. L'élément absorbeur d'énergie selon l'invention, permet d'alléger notablement la masse du véhicule, et permet également de réduire l'encombrement longitudinal du véhicule, en utilisant des portion de poutres creuses formant des structures consommatrices d'énergie 3 capables d'absorber une même quantité d'énergie que des structures métalliques classiques sur une distance plus réduite. En outre, l'invention permet de réduire l'encombrement lié au système d'assemblage d'une traverse sur des structures d'absorption d'énergie de choc, la traverse et la structure d'absorption d'énergie comprenant ici des portions de coque communes.

## Revendications

1. Elément absorbeur d'énergie de choc (1) pour véhicule automobile, comprenant une structure de coque (2) comprenant :
- une première portion de coque monobloc (4), dont la plus grande dimension s'étend suivant une première direction transversale (Y) du véhicule
- au moins deux portions (3) en forme de poutres creuses chacune à section à contour fermée (6) autour d'un axe longitudinal (X) de chaque portion de poutre, l'axe longitudinal (X) des poutres creuses étant sensiblement perpendiculaire à la première direction transversale,
la même première portion de coque monobloc (4) formant au moins une portion de chacune des poutres creuses (3) et s'étendant axialement sur la longueur des portions de poutres creuses, entre une portion d'attache (16, 17) des portions de poutres creuses (3) sur une structure du véhicule (18) et une autre extrémité axiale (12) des portions de poutres creuses (3) distante de la structure du véhicule, **caractérisé en ce que** l'épaisseur radiale (e) du contour (6) de la section fermée de chaque portion de poutre creuse est décroissante entre la première (11) et la seconde extrémité (12) de la portion de poutre, la structure de coque (2) comportant des zones (13) de recouvrement frontal, au niveau desquelles se superposent une épaisseur de coque correspondant à la première portion de coque monobloc (4) et au moins une autre épaisseur de coque, choisie parmi une portion d'une deuxième portion de coque monobloc (5), ou une seconde portion locale de coque (9) ou une troisième portion locale de coque (10), les zones (13) de recouvrement frontal comprenant des portions de coque s'étendant sensiblement perpendiculairement à l'axe longitudinal (X).

2. Elément absorbeur d'énergie, selon la revendication 1, dans lequel la surface totale de matière des sections droites de chaque portion de poutre creuse (3) perpendiculairement à l'axe longitudinal (X), est décroissante entre une première extrémité (11) de la portion de poutre et une seconde extrémité (12) de la portion de poutre.

3. Elément absorbeur d'énergie selon les revendications 1 ou 2, dans lequel la portion de poutre creuse (3) présente une forme sensiblement tronconique.

4. Elément absorbeur d'énergie selon l'une quelconque des revendications précédentes, dans lequel la portion de poutre creuse (3) comprend au moins une première et une seconde zone d'ailette, au niveau desquelles la section droite de la poutre (3) s'étend vers l'extérieur du contour moyen fermé de la poutre, en formant une première ailette (7) dans un premier plan géométrique de renfort et en formant une seconde ailette (8) dans un second plan géométrique de renfort.

5. Elément absorbeur d'énergie selon l'une quelconque des revendications précédentes, comprenant au moins une portion de coque (4, 5, 9, 10) réalisée en matériau composite à matrice à base polymère et renforcé par des fibres longues.

6. Elément absorbeur d'énergie selon les revendications 4 ou 5, comprenant au moins deux demi-coques (4-5, 4-9, 4-10) en matériau composite assemblées suivant au moins deux portions planes de chaque demi-coque, chaque portion plane contribuant à former une portion de l'épaisseur d'une des zones d'ailettes (7, 8).

7. Elément absorbeur d'énergie selon la revendication 6, dans lequel chaque demi-coque est formée en matériau composite renforcé de fibres disposées en couches successives, dans lequel le nombre de couches de fibres de renfort augmente entre la seconde (12) et la première (11) extrémité de la poutre.

8. Elément absorbeur d'énergie selon l'une quelconque des revendications précédentes, dans lequel toutes les portions de poutres creuses (3) sont définies pour partie par une même première portion de coque monobloc (4) et pour le restant par une même deuxième portion de coque monobloc (5) assemblée sur la première.

9. Elément absorbeur d'énergie selon l'une des revendications 1 à 7, dans lequel toutes les portions de poutres creuses (3) sont définies chacune pour partie par une même première portion de coque monobloc (4) et pour le restant par une autre portion locale de coque (9, 10) spécifique à cette portion de poutre creuse et assemblée sur la première portion de coque monobloc.

## Patentansprüche

1. Aufprallenergie-Absorberelement (1) für ein Kraftfahrzeug, das einen Schalenaufbau (2) enthält, der enthält:
- einen ersten einstückigen Schalenteil (4), dessen größte Abmessung sich gemäß einer ersten Querrichtung (Y) des Fahrzeugs erstreckt,
- mindestens zwei Teile (3) in Form von Hohlträgern, je mit einem Querschnitt mit geschlossenem Umriss (6) um eine Längsachse (X) jedes Trägerteils, wobei die Längsachse (X) der Hohlträger im Wesentlichen lotrecht zur ersten Querrichtung ist,
wobei der gleiche erste einstückige Schalenteil (4) mindestens einen Teil jedes der Hohlträger (3) formt und sich axial über die Länge der Hohlträgerteile zwischen einem Befestigungsteil (16, 17) der Hohlträgerteile (3) an einem Aufbau des Fahrzeugs (18) und einem anderen axialen Ende (12) der Hohlträgerteile (3) erstreckt, das vom Aufbau des Fahrzeugs entfernt ist, **dadurch gekennzeichnet, dass** die radiale Dicke (e) des Umrisses (6) des geschlossenen Querschnitts jedes Hohlträgerteils zwischen dem ersten (11) und dem zweiten Ende (12) des Trägerteils abnimmt, wobei der Schalenaufbau (2) frontale Bedeckungszonen (13) aufweist, in deren Bereich eine Schalendicke entsprechend dem ersten einstückigen Schalenteil (4) und mindestens eine andere Schalendicke sich überlagern, die ausgewählt wird aus einem Teil eines zweiten einstückigen Schalenteils (5), oder einem zweiten lokalen Schalenteil (9) oder einem dritten lokalen Schalenteil (10), wobei die frontalen Bedeckungszonen (13) Schalenteile enthalten, die sich im Wesentlichen lotrecht zur Längsachse (X) erstrecken.

2. Energieabsorberelement nach Anspruch 1, wobei die Gesamtmaterialfläche der Querschnitte jedes Hohlträgerteils (3) lotrecht zur Längsachse (X) zwischen einem ersten Ende (11) des Trägerteils und einem zweiten Ende (12) des Trägerteils (3) abnimmt.

3. Energieabsorberelement nach den Ansprüchen 1 oder 2, wobei der Hohlträgerteil (3) im Wesentlichen eine Kegelstumpfform aufweist.

4. Energieabsorberelement nach einem der vorhergehenden Ansprüche, wobei der Hohlträgerteil (3) mindestens eine erste und eine zweite Rippenzone enthält, in deren Bereich der Querschnitt des Trägers (3) sich nach außerhalb des geschlossenen mittleren Umrisses des Trägers erstreckt, indem er eine erste Rippe (7) in einer ersten geometrischen Verstärkungsebene formt, und indem er eine zweite Rippe (8) in einer zweiten geometrischen Verstärkungsebene formt.

5. Energieabsorberelement nach einem der vorhergehenden Ansprüche, das mindestens einen Schalenteil (4, 5, 9, 10) enthält, der aus Verbundmaterial mit einer Matrix auf der Basis von Polymer und durch lange Fasern verstärkt hergestellt ist.

6. Energieabsorberelement nach den Ansprüchen 4 oder 5, das mindestens zwei Halbschalen (4-5, 4-9, 4-10) aus Verbundmaterial enthält, die gemäß mindestens zwei ebenen Teilen jeder Halbschale zusammengebaut sind, wobei jeder ebene Teil dazu beiträgt, einen Teil der Dicke einer der Rippenzonen (7, 8) zu formen.

7. Energieabsorberelement nach Anspruch 6, wobei jede Halbschale aus Verbundmaterial geformt wird, das mit in aufeinanderfolgenden Schichten angeordneten Fasern verstärkt ist, wobei die Anzahl von Verstärkungsfaserschichten zwischen dem zweiten (12) und dem ersten (11) Ende des Trägers zunimmt.

8. Energieabsorberelement nach einem der vorhergehenden Ansprüche, wobei alle Hohlträgerteile (3) zum Teil durch einen gleichen ersten einstückigen Schalenteil (4) und ansonsten durch einen gleichen zweiten einstückigen Schalenteil (5) definiert werden, der auf den ersten montiert wird.

9. Energieabsorberelement nach einem der Ansprüche 1 bis 7, wobei alle Hohlträgerteile (3) je zum Teil durch einen gleichen ersten einstückigen Schalenteil (4) und ansonsten durch einen anderen lokalen Schalenteil (9, 10) spezifisch für diesen Hohlträgerteil und auf den ersten einstückigen Schalenteil montiert definiert werden.

## Claims

1. Impact-energy absorbing element (1) for a motor vehicle, comprising a shell structure (2) comprising:
- a first one-piece shell portion (4), the largest dimension of which extends in a first transverse direction (Y) of the vehicle,
- at least two hollow beam portions (3), each having a section with a closed contour (6) about a longitudinal axis (X) of each beam portion, the longitudinal axis (X) of the hollow beams being substantially perpendicular to the first transverse direction,
said first one-piece shell portion (4) forming at least one portion of each of the hollow beams (3) and extending axially along the length of the hollow beam portions, between an attachment portion (16, 17) of the hollow beam portions (3) on a structure of the vehicle (18) and another axial end (12) of the hollow beam portions (3) removed from the structure of the vehicle, **characterized in that** the radial thickness (e) of the contour (6) of the closed section of each hollow beam portion decreases between the first end (11) and the second end (12) of the beam portion, the shell structure (2) having front overlapping zones (13), where a thickness of the shell corresponding to the first one-piece shell portion (4) and at least one other shell thickness overlap, said other shell thickness being either a portion of a second one-piece shell portion (5) or a second local shell portion (9) or a third local shell portion (10), the front overlapping zones (13) including shell portions extending substantially perpendicularly to the longitudinal axis (X).

2. Energy absorbing element according to Claim 1, in which the total material surface area of the straight sections of each hollow beam portion (3) perpendicular to the longitudinal axis (X) decreases between a first end (11) of the beam portion and a second end (12) of the beam portion.

3. Energy absorbing element according to Claim 1 or 2, in which the hollow beam portion (3) has a substantially tapered shape.

4. Energy absorbing element according to any one of the preceding claims, in which the hollow beam portion (3) has at least one first fin zone and one second fin zone, at which the straight section of the beam (3) extends outwards from the closed median contour of the beam to form a first fin (7) in a first geometric strengthening plane and to form a second fin (8) in a second geometric strengthening plane.

5. Energy absorbing element according to any one of the preceding claims, including at least one shell portion (4, 5, 9, 10) made of a polymer-matrix composite material reinforced with long fibers.

6. Energy absorbing element according to Claim 4 or 5, including at least two half-shells (4-5, 4-9, 4-10) made of composite material assembled along at least two flat portions of each half-shell, each flat portion helping to form a portion of the thickness of one of the fin zones (7, 8).

7. Energy absorbing element according to Claim 6, in which the half-shell is made of composite material reinforced with fibers arranged in successive layers, in which the number of strengthening fiber layers increases between the second end (12) and the first end (11) of the beam.

8. Energy absorbing element according to any one of the preceding claims, in which all of the hollow beam portions (3) are defined in part by the same first one-piece shell portion (4) and for the remainder by the same second one-piece shell portion (5) assembled on the first.

9. Energy absorbing element according to one of Claims 1 to 7, in which each of the hollow beam portions (3) is defined in part by the same first one-piece shell portion (4) and for the remainder by another local shell portion (9, 10) specific to said hollow beam portion and assembled on the first one-piece shell portion.
